# EUROPEAN PATENT APPLICATION

(11) **EP 1 895 455 A1**
(43) Date of publication of application: **05.03.2008**
(21) Application number: 06126539.3
(22) Date of filing: 19.12.2006
(51) Int. Cl.: G06Q 10/00

(54) **Systems and methods for testing internal control effectiveness**

(30) Priority: 29.12.2005 US 319375
(71) Applicant: SAP AG, 69190 Walldorf (DE)
(72) Inventor: Bliznak, Karol, Walldorf 69190 (DE); Wefers, Marcus, Heidelberg 69118 (DE)
(74) Representative: Richardt, Markus Albert

(57) **Abstract**

Methods, systems, and computer program products are provided for managing internal controls. Internal control systems and methods are also disclosed that provide a service catalog comprising one or more test services relating to internal applications. In one implementation, a computer-implemented method is provided for testing operating effectiveness of controls for an entity. The method may comprise creating a test plan through a calling application using a service catalog, the test plan identifying controls to be tested using at least one internal application. The method may further comprise uploading control testing results for at least one scheduled test, the testing results being uploaded from the internal application to the service catalog, validating the control testing results at the service catalog, and sending the validated results to the calling application.

## Description

### 1. FIELD OF THE INVENTION

The present invention generally relates to data processing systems and related methods and computer program products. More particularly, the invention relates to computer-implemented systems and methods for managing internal controls, including systems and methods that test internal control effectiveness using, for example, a service catalog.

### II. BACKGROUND OF THE INVENTION

In recent years, efforts have been made to apply stricter requirements in the areas of corporate governance, financial disclosures, and accountability for corporate malfeasance. Governments in the United States and other countries have enacted legislation or regulations that impose more demanding requirements on corporations that are publicly listed and/or traded. Such measures are seen as being necessary to restore faith in financial reporting and maintain an orderly marketplace.

The Sarbanes-Oxley Act of 2002 is one example of legislation in the area of corporate governance. Sections 302 and 404 of the Sarbanes-Oxley Act are among the most relevant sections to public corporations in the United States. Section 302 includes provisions related to disclosure controls and procedures, such as provisions that require management to have responsibility for effective disclosure controls and procedures over financial reporting, operations, and compliance. On the other hand, Section 404 sets forth internal controls and procedures for financial reporting, including provisions that require a company's annual report to contain a report by management on the effectiveness of internal control over financial reporting.

Software and computerized applications have been developed to assist companies in managing internal controls and in testing various data processing functionalities, including their operating effectiveness, within specific systems. One example of such a system is an Enterprise Resource Planning (ERP) system. These internal control documentation applications within such systems enable companies to document test efforts for measuring the effectiveness of key control activities in material business processes within the system.

Such approaches, however, may be unreliable because they require a tester to manually document the results of the various tests. To further illustrate, a tester assigned to test the operating effectiveness of a particular control activity may have to manually perform a predetermined testing procedure. In addition, the tester is typically required to manually document the results of the test with the internal control documentation application. Examples of control documentation applications include the SAP Management of Internal Controls (MIC) application included with mySAP ERP, available from SAP AG, Walldorf, Germany. For IT-supported control activities, the testing procedure may prescribe logging on to an internal application, such as a Customer Relationship Management (CRM) system, that provides the required test results. As a result, the tester will be required to go back to the internal control documentation application in the main system, such as an ERP system, and document the test results manually in the form of a test log (e.g., Exceptions Found: Yes or No) and an issue (e.g., in the case of exceptions found). This process is highly inefficient, as it may require a significant amount of human resources to test even IT-supported controls all across the organization.

In view of the foregoing, there is an underlying problem in current approaches in terms of the inefficient usage of IT investments and human resources. This is evident in more than one area, including the testing of internal controls or control operating effectiveness within systems, such as planning systems. This results in costly efforts for a corporation to prove, for example, the effectiveness of key control activities in material business processes within the system and to document the results in a dedicated internal control application.

It is therefore an object of the present invention to provide a data processing system for efficient testing of data processing functionalities of backend systems, such as ERP systems, that minimizes the programming effort required for implementing various controls.

### SUMMARY OF THE INVENTION

The invention provides a data processing system, method, and computer program product as claimed in the independent claims. Preferred embodiments are given in the dependent claims.

The present invention is particularly advantageous in that it provides a data processing system for testing various data processing functions of backend systems that does not require programming a dedicated testing routine for each of the various data processing functions. Rather, the invention provides a data processing system that is flexible for testing of many different data processing functions and which is easy to use, to configure and maintain.

In accordance with an embodiment of the invention one or more of the backend systems is distributed and has one or more replicas that can be tested.

In accordance with an embodiment of the invention the data processing system comprises a database for temporarily storing data that has been returned by a backend system during the testing. After execution of the test the returned data is read from the database for evaluation and analysis. This facilitates usage of the data processing system by multiple users and for running multiple tests concurrently. In particular, this enables asynchronous operation of the data processing system and the testing performed on the backend systems.

Embodiments consistent with the present invention provide systems and methods for managing internal controls for a company, an organization, or any other entity. Embodiments of the invention may be implemented for internal control projects within systems, such as planning systems, and, in particular, the control operating effectiveness testing phase of an internal control project (e.g., a Sarbanes-Oxley Section 404 compliance project, a project to comply with similar local requirements, or a control project implemented as a best practice).

Systems and methods consistent with the invention may be computer and/or software implemented and provide a more efficient approach to internal control testing and documentation. In accordance with one embodiment, a computer-implemented method is provided for testing the operating effectiveness of controls for an entity. The method may comprise creating a test plan through a calling application using a service catalog, the test plan identifying controls to be tested using at least one internal application, uploading control testing results for at least one scheduled test, the testing results being uploaded from the internal application to the service catalog, validating the control testing results at the service catalog, and sending the validated results to the calling application.

In accordance with another embodiment, a computer-implemented method for testing the operating effectiveness of controls for an entity is provided. The method may comprise offering a catalog of one or more test services through a calling application, the test services relating to controls to be tested using at least one internal application, receiving one or more parameters associated with at least one test service, sending the test service to the internal application associated with the test service for processing, receiving control testing results associated with the one test service, validating the control testing results, and sending the validated results to the calling application.

In accordance with another embodiment, a system is provided for testing the operating effectiveness of controls for an entity. The system may comprise means for creating a test plan through a calling application using a service catalog, the test plan identifying controls to be tested using at least one internal application, means for uploading control testing results for at least one scheduled test, the testing results being uploaded from the internal application to the service catalog, means for validating the control testing results at the service catalog, and means for sending the validated results to the calling application.

According to a still further embodiment of the invention, a system is provided for testing the operating effectiveness of controls for an entity. The system may comprise means for offering a catalog of one or more test services through a calling application, the test services relating to controls to be tested using at least one internal application, means for receiving one or more parameters associated with at least one test service, means for sending the test service to the internal application associated with the test service for processing, means for receiving control testing results associated with the one test service, means for validating the control testing results, and means for sending the validated results to the calling application.

According to yet another embodiment, a computer program product includes a computer program stored thereon for providing a user interface. The computer program comprises instructions operable to cause the computer to perform a method for testing the operating effectiveness of controls for an entity. The method may comprise creating a test plan through a calling application using a service catalog, the test plan identifying controls to be tested using at least one internal application, uploading control testing results for at least one scheduled test, the testing results being uploaded from the internal application to the service catalog, validating the control testing results at the service catalog, and sending the validated results to the calling application.

According to yet another embodiment, a computer program product includes a computer program stored thereon for providing a user interface. The computer program comprises instructions operable to cause the computer to perform a method for testing the operating effectiveness of controls for an entity, the method comprising offering a catalog of one or more test services through a calling application, the test services relating to controls to be tested using at least one internal application, receiving one or more parameters associated with at least one test service, sending the test service to the internal application associated with the test service for processing, receiving control testing results associated with the one test service, validating the control testing results, and sending the validated results to the calling application.

Embodiments of the invention further relate to computer-program products and computer-readable media comprising instructions for causing a processor or computer to implement methods and systems consistent with the present invention.

Embodiments of the invention are described herein with reference to a backend system. However, one skilled in the art will appreciate that the testing may be performed on an internal application, or similar application of a system, and is not limited to backend systems.

It is to be understood that both the foregoing general description and the following detailed description are exemplary and explanatory only, and should not be considered restrictive of the scope of the invention, as described and claimed. Further, features and/or variations may be provided in addition to those set forth herein. For example, embodiments of the invention may be directed to various combinations and subcombinations of the features described in the detailed description.

### BRIEF DESCRIPTION OF THE DRAWINGS

The accompanying drawings, which are incorporated in and constitute a part of this disclosure, illustrate various embodiments and aspects of the present invention. In the drawings:

FIG. 1 illustrates a flowchart of an exemplary method for managing internal controls, consistent with an embodiment of the present invention;

FIG. 2 is a flowchart of an exemplary method for testing operating effectiveness, consistent with an embodiment of the invention;

FIG. 3 is a flowchart of an exemplary method for creating a test plan using a service catalog, consistent with an embodiment of the invention;

FIG. 4 is a block diagram of an exemplary system environment for implementing embodiments of the invention;

FIG. 5. is a more detailed block diagram of the exemplary system environment; and

FIG. 6 is a flowchart showing an embodiment of the method of the invention.

### DESCRIPTION OF THE EMBODIMENTS

The following detailed description refers to the accompanying drawings. Wherever possible, the same reference numbers are used in the drawings and the following description to refer to the same or similar parts. While several exemplary embodiments and features of the invention are described herein, modifications, adaptations, and other implementations are possible, without departing from the spirit and scope of the invention. For example, substitutions, additions, or modifications may be made to the components illustrated in the drawings, and the exemplary methods described herein may be modified by substituting, reordering, or adding steps to the disclosed methods. Accordingly, the following detailed description does not limit the invention. Instead, the proper scope of the invention is defined by the appended claims.

Embodiments of the invention relate to computerized systems and methods for managing internal controls. Such systems and methods may be used by an organization, a corporation, a company, or any other entity to satisfy local and/or regional requirements for corporate governance and financial reporting, such as that required by the Sarbanes-Oxley Act. Embodiments of the invention may also be used for a control project implemented as a best practice.

As further disclosed herein, embodiments of the invention also relate to systems and methods for running and posting test results of internal applications within a system using an internal control documentation application, such as an internal control documentation application of an ERP system, and a service catalog. The service catalog may feature best-practice test services, and the services in the catalog may be grouped within service groups according to the business area affected. The test results may relate to the effectiveness of any control activity. For instance, the test results may be generated in relation to the control operating effectiveness testing phase of an internal control project.

In accordance with one embodiment, the internal documentation application may be an internal control documentation application (such as the SAP MIC application) or similar application related to a system, such as an ERP system. Additionally, systems and methods may be provided to automatically generate a pre-filled test log and/or create an issue protocol in case of reported exceptions.

Embodiments of the invention can help companies and other entities to better leverage their IT investments for control testing and also lower the total cost of ownership (TCO). In one embodiment, the documentation related to test results is automatically included in the control documentation application and, thus, the need to manually type or otherwise input the results into the application is eliminated.

Embodiments of the invention may be implemented for internal control projects and, in particular, the control operating effectiveness testing phase of an internal control project. Such projects may comprise a Sarbanes-Oxley section 404 compliance project, a project to comply with similar local requirements, or a control project implemented as a best practice.

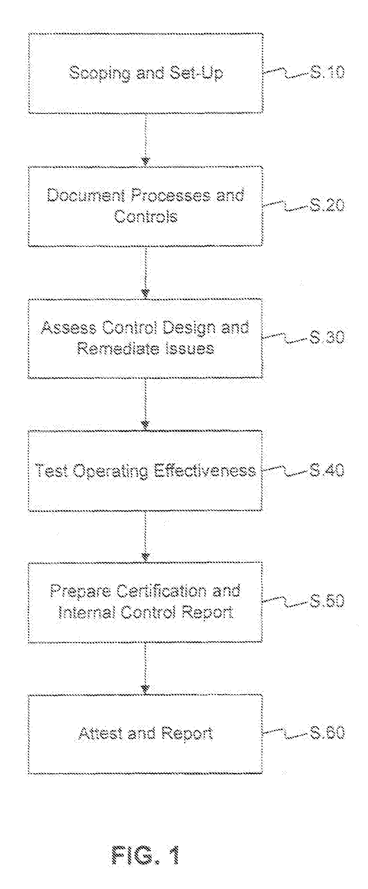

To provide a better understanding of the principles and scope of the invention, a flowchart of an exemplary method for managing internal controls is provided in FIG. 1. As shown in the embodiment of FIG. 1, the method comprises scoping and project set-up (S. 10), documentation of processes and internal controls (S.20), assessment and remediation of issues (S.30), testing of operating effectiveness (S.40), certification and generation of an internal control project (S.50), and/or attesting and reporting (S.60). Depending on the internal control project to be implemented, one or more of the steps shown in FIG. I can be combined, modified, rearranged, substituted, or eliminated. Other modifications can also be made, as will be appreciated by one skilled in the art, including the use of conventional techniques or approaches.

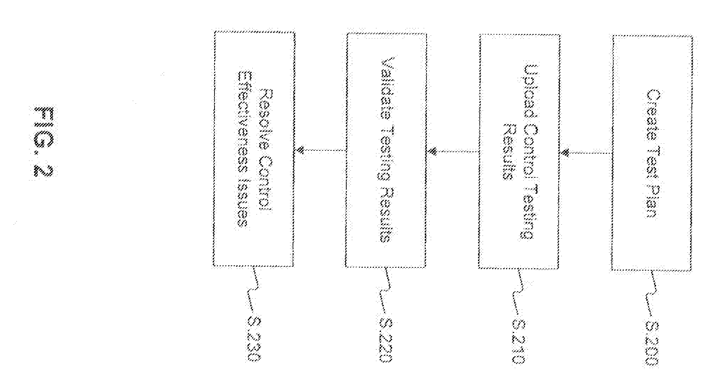

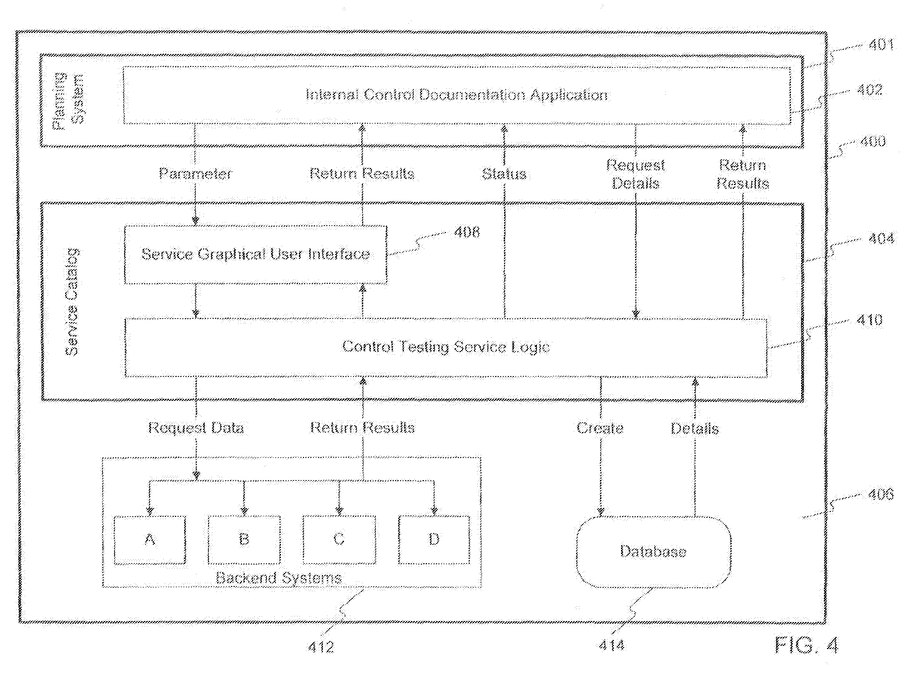

As further disclosed herein, an exemplary process consistent with the invention for testing operating effectiveness (S.40) is described below with reference to FIG. 2. The exemplary process of FIG. 2 includes the uploading or posting of control test results (see S.210) from an internal application. Exemplary embodiments of associated computer-based environments is provided below with reference to, for example, FIG 4.

Referring again to FIG. 1, scoping and set-up (S.10) may comprise analyzing and identifying organizational units and processes that are to be within the scope of the project. Conventionally, this may include defining management requirements and project structure. Additionally, a hierarchy may be created to indicate the relationship between various organizational units or business units (e.g., Corporate, Legal Entity E1-En, Business Unit BU1-BUn, Shared Services, etc.). There may be unlimited levels within the hierarchy. Furthermore, the organizational unit hierarchy may be generated and stored based on an existing human resources (HR) organizational chart or similar type of chart stored in a database or business warehouse.

Documentation of processes and controls (S.20) may include documenting and describing processes, control objectives, risks, and internal controls. For example, processes that are determined to have a material impact on financial reporting and/or disclosure controls and procedures may be grouped and associated to generate a process hierarchy. The process hierarchy may be business-unit independent and provide a central process catalog. Furthermore, control objectives and risks may be defined in the central catalog. The control objectives and risks may be determined by individuals within the different corporate or business units of the organization as part of S.10 or S.20.

In general, a control objective is a statement that captures the purpose of control(s) within the process. One or more control objectives may be defined for each process. Further, following the COSO framework (i.e., the framework of the Committee of Sponsoring Organization), each control objective may be categorized as financial, operational, or compliance related. In contrast, a risk is a potential event that can adversely impact the desired outcome of the control objectives.

As part of S.20, each of the identified processes may be assigned to an organizational unit or business unit. As part of this process, responsible personnel within each business unit may choose from the central process catalog those processes that are applicable and in scope to their business unit. When assigning a process to a business unit, any related process groups may be automatically inherited from the central process catalog.

Consistent with embodiments of the invention, there may be various types of controls. For example, automated controls may exist that are essentially checks or restrictions automatically imposed by a system, such as an ERP system. These controls may depend on the configuration of the system and may comprise controls related to user access, tolerance limits, field validation checks, and other key controls. Another type of control is manual controls. This type of control may be processed-based and rely upon an individual to perform a certain task or to undertake a specific responsibility. Personnel or other individuals may be tasked to perform such actions, depending on the required controls.

The assessment and remediation of issues (S.30) may include control design assessment, and the identification and remediation of issues. Using workflows, key managers and other personnel at a company may be tasked with assessing specific controls. To facilitate control design assessment, detailed user interfaces may be provided that include, for example, text entry fields and drop-down selection items. When implemented as one or more graphical user interfaces (GUls), a user can perform the assessment from his/her computer and report their findings to a central application or database. To the extent issues or exceptions are identified in the control design, management at the company may then assess the same and remediate, as needed. Remediation in stage S.30 may include adding, modifying, or otherwise correcting existing controls, as well as reassigning or tasking new individuals to handle, for example, defined manual controls.

As indicated above, the testing of operating effectiveness (S.40) may be carried out consistent with, for example, the embodiment of FIG. 2. In general, testing may encompass testing controls and documenting the test results. Based on the results, any issues or exceptions may be identified and remediated. Advantageously, the testing may be performed with one or more internal applications, such as various backend systems or other internal applications, and the test results are automatically or semi-automatically uploaded or posted to an internal control documentation application.

Upon completion of testing (S.40), certification and generation of an internal control report (S.50) may be performed, as well as attesting and sign-off (S.60). Stage S.50 may include generating one or more internal control reports that include information on the test results and/or determined operating effectiveness. Before a CEO or CFO can submit a "clean" report to the pertinent authorities, attesting and sign-off (S.60) may be carried out, consistent with conventional approaches. For example, attesting and sign-off may be organized through workflows, with the pertinent personnel using one or more GUls to submit their ratings, comments, etc., with respect to specific business units, together with their sign-off date.

As described above, the testing of operating, effectiveness (stage S.40) may be performed using one or more internal backend systems or applications. By way of example, FIG. 2 is a flowchart of an exemplary method for testing operating effectiveness. The embodiment of FIG. 2 may be implemented using a computer-implemented system or environment, such as that illustrated in FIG. 4.

Referring to FIG. 2, an exemplary method is shown that includes creating a test plan (S.200), uploading control testing results (S.210), validating testing results (S.220), and resolving control effectiveness issues (S.230). Depending on the test plan and controls to be tested, one or more of the steps in FIG. 2 can be combined, modified, rearranged, substituted, or eliminated. Other modifications can also be made, as will be appreciated by those skilled in the art, consistent with the present invention and this disclosure.

For purposes of illustration, the embodiment of FIG. 2 will be described with reference to an internal control documentation application that is responsible for documenting the results of testing activities. Further, reference will be made to at least one internal backend system or application that is responsible for performing tests and providing test results to the internal control documentation application via a service within a service catalog. While reference is made to these specific applications, it will be appreciated by those skilled in the art that the principles of FIG. 2 and that of the claimed invention may be applied to different environments and application arrangements. For example, testing may be performed by using a plurality of internal applications or internal system software (e.g., another application within an ERP system).

Creating a test plan (S.200) may include specifying what controls are to be tested and how they should be tested. A test plan containing this information may be created by, for example, manager(s) or other designated personnel for each business unit. The test plan may also include scheduling information that indicates when each test is to be performed and assignment information regarding testers. In addition, controls may be certified for automated or self-automated testing via a specific internal backend system or application. For this purpose, a certification attribute may be provided that indicates what type of testing is permitted. In one embodiment, a basic assumption may be that a control cannot be automatically tested unless automatic testing is explicitly allowed for the control by an authorized person. In such a case, an internal auditor may set the certification attribute to indicate whether automated testing or self-automated testing is permitted. In the automated mode, the results may be posted to the internal control documentation application without any human intervention. In contrast, in the semi-automated mode, the test results may be uploaded or imported only as a draft, with confirmation of the results by a human tester being necessary.

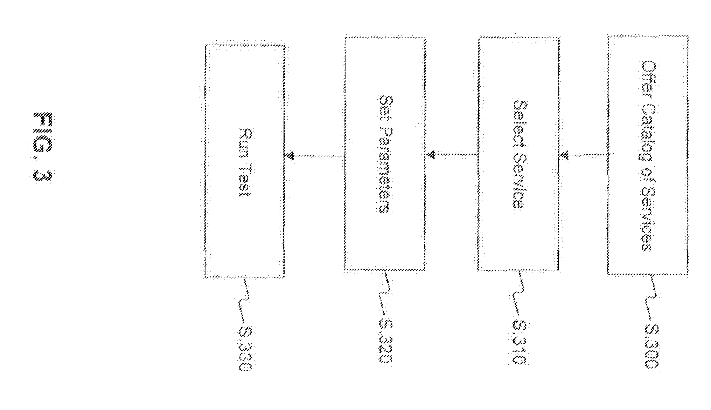

FIG. 3 is a flowchart of an exemplary method for creating a test plan using a service catalog, consistent with an embodiment of the invention. A system or application may first offer a service catalog that may feature best-practices test services, for example, "Top n testing services" (S.300). A service catalog may be implemented as a separate piece of software that contains services from various backend systems of applications. The services in the service catalog may be grouped within one or more service groups according to the business area affected by the control, e.g., Treasury or Consolidation. The services in the services catalog may be activated within an internal control documentation application and assigned to individual controls. After a control has been released for automated testing, a service, such as a test service, from the service catalog can be selected to deliver the test results for a particular control (S.310). In one embodiment, a customer or end user may be able to include his/her own custom-made service in the service catalog. For example, a customer may include his/her own custom made services in the service catalog by providing a custom made or standard delivered reporting program module (query) and enhancing it by adding program code to the reporting program. The added coding may enable the reporting program to be connected to the service catalog and equipped by threshold values supporting the validation of delivered results by the validation function of the service catalog.

One or more GUls may be used to select test services from the service catalog. Such an interface may be a technical interface (e.g., a concrete technical Web service) communicating between a test service from the service catalog and the calling application. An interface may include, for example, entry fields and control buttons for entering information. In one embodiment, a GUI is provided with message prompts, entry fields, and/or control buttons to facilitate the selecting of one or more services from the service catalog by a user. Such a GUI may comprise one or more screens or windows to guide a user through the selection of test services. Help screens may provide information for the user, and/or drop-down menus or tables may provide lists of predefined profiles, or other elements for selection by the user when selecting test services from the service catalog.

After a service has been selected, a user may set one or more parameters for the selected service (S.320). A selected service can be configured by selecting relevant report or program output fields to deliver test results. Threshold values may be set that indicate different control deficiency levels when the thresholds are exceeded. The control deficiency level may correspond with the priority of the issue to be reported during the upload of the testing results. For example, a field "XY" of a particular ALV report may be selected as the criteria. An ALV is a visualization program tool used to display and format lists in a SAP system. However, as will be appreciated by those skilled in the art, other types of visualization tools may be used. The parameters for the "XY" field may be set by a user configuring this particular service. The parameters may be set as follows: For example, if the value returned in the field equals "0," the control is effective and, thus, no exceptions/issues will be reported during the upload of the testing results. If the value is between "1 " and "3," an exception will be reported and an issue will be reported with a medium priority. If the value is greater than "3," an exception will be reported and a high priority issue will be created.

In another example, a control called "All incoming invoices should be accurately, completely and promptly registered, and processed," for the Process Group "Purchasing" may be created. The test service assigned to this control may spot duplicate invoices in an ERP system and raise an exception if the number of duplicate invoices is higher than the threshold value (e.g., zero tolerance). Other examples include test services that check the customizing settings of an ERP system that represent configurable IT controls and raise exceptions when the particular customizing flag is set to a value (e.g., the control is switched off) that implicitly increases a fraud risk.

Once a test service is selected by a user, the application or backend system corresponding to the test service will run the specified service (S.330). For example, if the test service corresponds to a Customer Relationship Management (CRM) system, the CRM system may run the particular test service.

In one embodiment, a user with the respective knowledge of using the service catalog may select the correct backend system(s) when assigning the test service from a service catalog to a control. Alternatively, an expert system or programmed logic may be used to select the backend system(s) to run a particular test service.

Referring again to FIG. 2, uploading control testing results (S.210) may be performed with respect to the testing results from one or more internal applications or backend systems. As a prerequisite, each control may be required to have a testing attribute that indicates whether automated or self-automated testing is permitted from an internal application. In such a case, uploading of the test results may be achieved through the selected test service, as described further below. Consistent with embodiments of the invention, the testing results may include automatically generated test logs and/or potential issues.

After the corresponding application or backend system runs the selected test service, the results may be uploaded to the internal control application via the service catalog (cf. FIG. 3, S.310). As further described below, the test results are first sent back to the service catalog, where the results are validated and then the internal control documentation application may receive the results of the validation.

In one embodiment, the uploading of test results may be implemented in accordance with a "pull" principle. With a pull approach, the internal control documentation application may poll or request the test results from the applicable application or backend system, consistent with a defined time window or on a predetermined schedule. After the results of the selected test service are first uploaded to the test service, the results are then validated. The results of the validation are then pulled into the control documentation application via the selected service in the service catalog.

In accordance with another aspect, a test log interface of the service catalog may be adapted to allow the automated creation of a pre-filled test log and an issue protocol in case of reported exceptions. Test log and issue fields may include an Exceptions field (Yes or No) and an Issue Priority field (High, Medium, or Low). Additional texts (test log/issue title, comments, descriptions) and other fields (created by, test date) can also be influenced by the interface.

In accordance with yet another aspect of the present invention, the testing services may store the detailed results of the test service in a dedicated persistence layer, or database for future reference. These details may be necessary to secure data auditability and include information beyond the existence of exceptions and issue details. Details concerning the test service report's results and date/time of when the service was called may be stored in this database.

Referring again to FIG. 2, subsequent to uploading (S.210), the test results may be validated (S.220). Validation may be implemented using one or more processes. In accordance with one embodiment, when automated testing data is imported, further activities are triggered based on the test automation type that is selected (e.g., semi-automated test or automated test).

For a "semi-automated test," a test log and a possible issue can be posted under the status "draft." In such a case, a workflow notification may be sent to a human tester assigned to the semiautomatic testing slot. The task text may comprise, for example, appropriate text, such as "Validate semiautomatic test." The human tester can then log onto the system and work as if he/she created the test log and the possible issue (i.e., the fields can be modified by the tester). Finally, the tester may submit the test log with the possible issue.

With an "automated test" type, the test log and a possible issue can be imported directly under the status "submitted." Hence, an issue processor filed may be pre-filed automatically by the name of the person assigned as the default issue owner for the given business unit. Furthermore, the issue may be sent via the workflow to a processor.

In one embodiment, validation of the test results may depend on the parameters set by the user in relation to the selected test service (cf. FIG. 3, S.320). Based on the results of the test, the service sends the results of the validation to the calling application. For example, if the results of a test service is "12344," and a threshold parameter is set as "1000," and anything higher than this would result in an "exception," then in this scenario, the service may send the calling application "exception found" as the results of the validation.

After validating the testing results (S.220), control effectiveness issues may be resolved (S.230). Various processes may be implemented for handling resolution. In one embodiment, the issue resolution procedure occurs outside of the system and is documented in the control documentation application. If a particular issue requires a more complex solution, a remediation measure may be documented in the control documentation application in the form of a remediation plan. The status of the remediation plan can be regularly updated by a person assigned as a remediation plan owner. After the issue is resolved, new test results may be uploaded from the internal application to the control documentation application.

FIG. 4 is a block diagram of an exemplary system environment for implementing embodiments of the invention. As shown in FIG. 4, system environment 400 includes a number of components, including a system, such as a planning system 401, a service catalog 404, one or more backend system(s) 412 (A-D), and a database 414. The planning system 400 may include an internal control documentation application 402. The service catalog 404 may include a service GUI 408 and control testing service logic 410.

Internal control documentation application 402 may be implemented as a control documentation application (such as MIC) or calling application, and receive validated test results from internal application(s) or backend system(s) 412 via the service catalog 404. Internal control documentation application 402 and backend system(s) 412 may also directly communicate with one another via, for example, a system network or internal bus network. In a similar manner, communication with the other components (e.g., database 414, planning system 401) may be implemented for issuing commands, communicating data, etc.

The service catalog 404 may be implemented as software within system 400 and may include a service GUI 408 and control testing service logic 410. Service catalog 404 may also be a combination of one or more software applications or modules. As will be appreciated by one skilled in the art, the various applications and components of system environment 400 may be hosted or executed on any number of computers or other processors and, therefore, FIG. 4 should not be interpreted as limiting the arrangement or configuration of the applications and components of system environment 400.

In operation, one or more test services chosen from the service catalog 404 may be executed to investigate control effectiveness, such as the effectiveness of prescribed authorizations or control execution logs. A user (such as a business-type person with knowledge of, for example, required due dates of compliance-ensuring filings) may select one or more test services from a service catalog 404 using service GUI 408 (cf. FIG. 3, S.310). Once the test is chosen, the user may further configure the test service by setting one or more parameters, as described above (cf. FIG. 3, S.320). The parameters are integrated into the test service using the control testing service logic 410. The test service is then run by the appropriate internal application or backend system(s) 412 (cf. FIG. 3, S.330).

The internal control documentation application 402 may then request the test results from the backend system(s) 412 via the service catalog 404 (cf. FIG. 3, S.310). The calling application may call the service to get the "status", for example, in the following format: "Exceptions found" versus "No exceptions found." Before the calling application receives the "status," the selected test service in the service catalog 404 may upload the data from the appropriate backend system(s) 412 (cf. FIG. 2, S.210) and validate the data (cf. FIG. 2, S.220). The validated results are then sent back to the internal control documentation application 402.

Only the status of the test service may be sent back to the calling application after validation takes place. There may exist more detailed data behind the determined status of the test service as a result of the respective service run. These details may be stored in database 414 for future reference purposes. For example, if an auditor sees the status "Exceptions found" as documented in the calling application and is interested in these more detailed results, the auditor may "request details" and these details may be provided ("returns results"). Details may be, for example, "the service XY was called on November 14, 2005 with the following results 123456, 4445556, etc.).

For example, "reconciliation between a special ledger and a general ledger" may be a control that a user of a financial system may choose to test in a financial system. Once this control has been released for testing, the user may select a test service to test the time delay between the two ledgers, for example, a "time delay" service (cf. FIG. 3, S.310). Once this "time delay" service has been selected, a user may set one or more parameters for the "time delay" service (cf. FIG. 3, S.320). A user may set as a parameter a delay of greater than two hours to be an indication of "normal," and a delay of more than eight hours to be "severe." After the service has been selected and the parameters have been set, the financial application corresponding to the "time delay" service is run (cf. FIG. 3, S.330). Once the test has been run by the financial application, the selected service "time delay" reads the data from the backend system(s) 412 - here, the financial application - and validates the data. If, in this scenario, the time delay was greater than two hours but less than eight, then the test is "normal" according to the parameters of the test. An internal control documentation application 402 may then receive "normal" as the results of the test service "time delay." Any other details associated, with this 'time delay" service may be stored in database 414 for future reference.

In accordance with one embodiment, the posted data from backend system(s) 412 may be used to automatically create a test log in database 414. The test log may include various information, such as Exceptions (Yes or No), Comment (long text), and Tested On (date). Further, the created issue may include information, such as the Priority status (High, Medium, Low, etc.) and a Description regarding the same (long text). The test log may be automatically consolidated together based on the information provided by the backend system(s) 412.

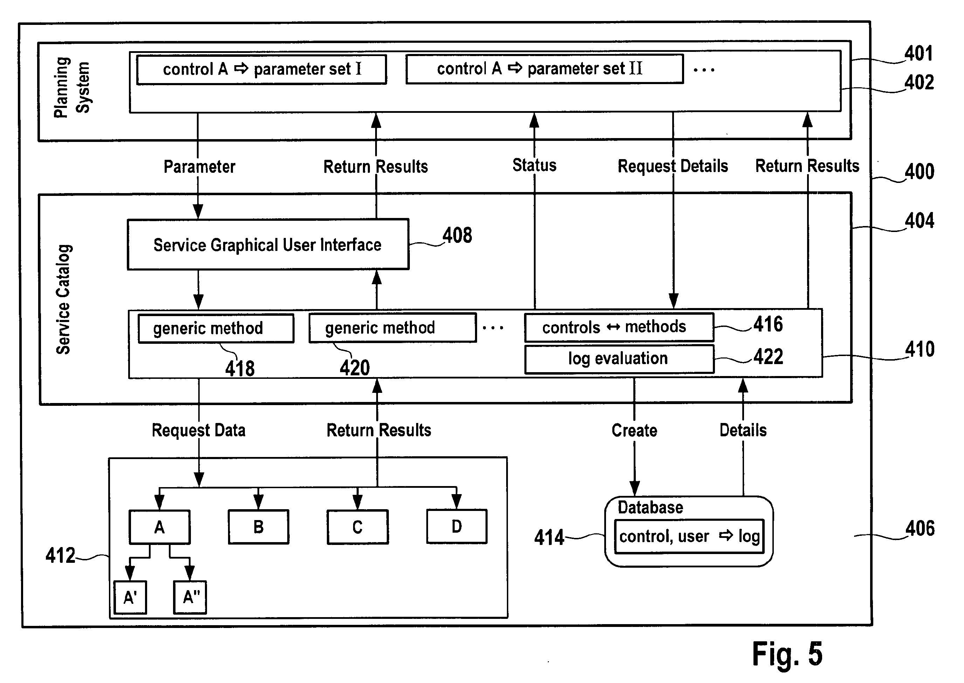

Fig. 5 shows a more detailed embodiment of a data processing system that implements the system environment 400 of fig. 4. A user may select a plurality of controls for testing through the service GUI 408. The testing service logic 410 assigns each testable control to one of a plurality of generic methods. For example, the control testing service logic 410 contains a mapping table 416 in order to assign a generic method to each one of the testable controls.
In the embodiment considered here the control testing service logic 410 has at least two generic methods 418 and 420 for testing controls. For example, the generic method 418 has the purpose of checking a table entry for compliance with an entry into another table; both table entries need to be specified by parameters when the generic method 418 is called. The generic method 420 may be of a procedural nature, i.e. the generic method 420 serves for initiating a data processing function for checking a control to be specified in order to obtain the result to be evaluated.
The control testing service logic 410 contains program instructions 422 for evaluating data that has been returned from one of the backend systems in response to execution of a test.
The internal control documentation application 402 is machine readable such that parameters for instantiation of one of the generic methods can be read automatically by the service catalogue 404. For example, the internal control documentation application 402 may have the form of an XML document. The internal control documentation application 402 contains or has access to a file that maps each testable control to a parameter set. For example, the testable control A is assigned to a parameter set I and a testable control B is assigned to a parameter set II, etc. Each of the parameter sets may comprise business logic parameters and technical parameters, such as technical parameters for selecting one of the backend systems for execution of the test and/or sample data for running a test.
This may include a parameter identifying a replica of one of the backend systems, such as replicas A' or A" of the backend systems 412. For example, backend system A is an ERP system containing a database and backend systems A' and A" are similar ERP systems that contain replicated databases that are synchronized with the database of A.
The database 414 serves for temporarily storing data that is returned from one of the backend systems in response to execution of the test. This data may be stored using the tested control and the user that initiated the test as a key in order to enable asynchronous operation of the service catalogue 404, and in particular the selection of tests to be performed, access to the parameters of the planning system, execution of the tests and evaluation of the tests. All these functionalities of the system environment 400 can be executed in parallel for multiple users and multiple tests in parallel and asynchroneously. It is a particular advantage that the service catalogue 404 does not need to wait until a given test has been completed until the next test can be initiated. For example the program instructions 422 can access the database 414 for reading the data that has been returned in response to a previous test while another test is ongoing in one of the backend systems and still another test is being prepared using the service catalogue 404.

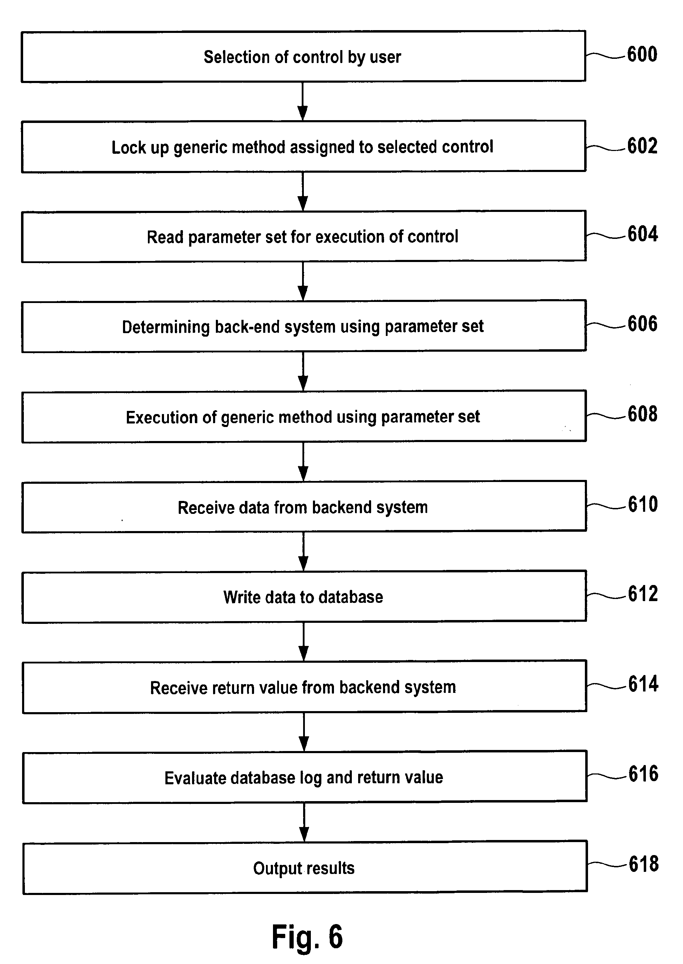

Fig. 6 shows a respective flowchart. In step 600 a user selects one of the controls for testing from the service catalogue 404. In response a generic method that is assigned to this control for testing is looked up from the mapping table 416 in step 602. Further, the parameter set that is assigned to the selected control is read from the internal control documentation application 402 by the control testing service logic 410 (step 604). This parameter set is used in order to parameterize the generic testing method that is assigned to the selected control, such as the generic method 418 or 420. The testing method which is thus obtained is then executed by the control testing service logic 410 and the backend system as identified (step 606) by e.g. one of the parameters (step 608).
The results returned by the backend system under test are temporarily stored by the control testing service logic 410 in the database 414, e.g. using the tested control and/or the user that has initiated the test as an access key (step 610 and 612). When the control testing service logic 410 receives a return value from the backend system under test being indicative of completion of the execution of the test, execution of the program instructions 422 is invoked for evaluation of the results returned from the backend system under test (step 614). The program instructions 422 perform a database query in order to retrieve the test data from the database 414 using the key and to evaluate the data and the return value (step 616). In step 618 the result of the evaluation is outputted to a user and/or to the internal control documentation application 402.

While certain features and embodiments of the invention have been described, other embodiments of the invention will be apparent to those skilled in the art from consideration of the specification and practice of the embodiments of the invention disclosed herein. Furthermore, although embodiments of the present invention have been described as being associated with data stored in memory and other storage mediums, one skilled in the art will appreciate that these aspects can also be stored on or read from other types of computer-readable media, such as secondary storage devices, like hard disks, floppy disks, or a CD-ROM, a carrier wave from the Internet, or other forms of RAM or ROM. Further, the steps of the disclosed methods may be modified in any manner, including reordering steps and/or inserting or deleting steps, without departing from the principles of the invention.

It is intended, therefore, that the specification and examples be considered as exemplary only, with a true scope and spirit of the invention being indicated by the following claims and their full scope of equivalents.

## Claims

1. A computer-implemented method for testing operating effectiveness of controls for an entity, the method comprising:
creating a test plan through a calling application using a service catalog, the test plan identifying controls to be tested using at least one internal application;
uploading control testing results for at least one scheduled test, the testing results being uploaded from the internal application to the service catalog;
validating the control testing results at the service catalog; and
sending the validated results to the calling application.

2. The computer-implemented method of claim 1, wherein creating the test plan further comprises:
selecting a test service from the service catalog relating to the at least one scheduled test;
configuring one or more parameters associated with the selected test service; and
sending the selected test service to the internal application associated with the selected test service for processing.

3. The computer-implemented method of claim 1, wherein uploading of control testing results is implemented in accordance with a pull procedure.

4. The computer-implemented method of claim 1, wherein validating further comprises:
comparing the control testing results with the one or more parameters.

5. A computer-implemented method for testing operating effectiveness of controls for an entity, the method comprising:
offering a catalog of one or more test services through a calling application, the test services relating to controls to be tested using at least one internal application; receiving one or more parameters associated with at least one test service;
sending the test service to the internal application associated with the test service for processing;
receiving control testing results associated with the one test service;
validating the control testing results; and
sending the validated results to the calling application.

6. The computer-implemented method of claim 5, further comprising sending the validated results to a control documentation application.

7. The computer-implemented method of claim 5, wherein receiving control testing results is implemented in accordance with a pull procedure.

8. The computer-implemented method of claim 5, wherein validating the control testing results further comprises comparing the control testing results with the one or more parameters.

9. A system for testing control operating effectiveness, the system comprising:
means for creating a test plan through a calling application using a service catalog, the test plan identifying controls to be tested using at least one internal application;
means for uploading control testing results for at least one scheduled test, the testing results being uploaded from the internal application to the service catalog;
means for validating the control testing results at the service catalog; and
means for sending the validated results to the calling application.

10. The system of claim 9, wherein the means for creating the test plan further comprises:
means for selecting a test service from the service catalog relating to the at least one scheduled test;
means for configuring one or more parameters associated with the selected test service; and
means for sending the selected test service to the internal application associated with the selected test service for processing.

11. The system of claim 9, wherein the uploading of control testing results is implemented in accordance with a pull procedure.

12. The system of claim 9, wherein the means for validating comprises means for comparing the control testing results with the one or more parameters.

13. A system for testing control operating effectiveness, the system comprising:
means for offering a catalog of one or more test services through a calling application, the test services relating to controls to be tested using at least one internal application;
means for receiving one or more parameters associated with at least one test service;
means for sending the test service to the internal application associated with the test service for processing;
means for receiving control testing results associated with the one test service;
means for validating the control testing results; and
means for sending the validated results to the calling application.

14. The system of claim 13, further comprising:
means for sending the validated results to a control documentation application.

15. The system of claim 13, wherein the means for receiving control testing results is implemented in accordance with a pull procedure.

16. A computer program product with a computer program stored thereon for performing a method in accordance with any one of the preceding claims 1 to 8.

17. A data processing system for testing of predefined controls using generic methods, each method being adapted for testing data processing functions of one or more of a plurality of backend systems (A, A', A",B, C, D,...), the data processing system comprising:
a planning system (402) for assigning a parameter set to each one of the predefined controls,
a service catalogue system (404) comprising the generic methods (418, 420,...), an assignment of each one of the predefined controls to one of the generic methods, a computer program (422) for evaluating data returned from one of the plurality of backend systems in response to execution of one of the predefined controls, and a user interface (408) for a user's selection of one of the predefined controls,
the service catalogue system being adapted to retrieve one of the parameter sets being assigned to a user selected control from the planning system to initiate execution of the generic method being assigned to the user selected control using the retrieved parameter set for execution of that control.

18. The data processing system of claim 17, each parameter set comprising at least one parameter indicative of one of the backend systems for execution of the respective control.

19. The data processing system of claim 17 or 18, further comprising a database (414), the service catalogue system being adapted to temporarily store the data returned from the one of the plurality of backend systems in the database for later evaluation by the computer program.
